Europäisches Patentamt

European Patent Office

Office européen des brevets

(19)

(11) **EP 0 932 857 B1**

(12) **EUROPÄISCHE PATENTSCHRIFT**

(45) Veröffentlichungstag und Bekanntmachung des Hinweises auf die Patenterteilung:
**20.03.2002  Patentblatt 2002/12**

(21) Anmeldenummer: **97945755.3**

(22) Anmeldetag: **16.10.1997**

(51) Int Cl.[7]: **G05B 17/02**, G05B 23/02

(86) Internationale Anmeldenummer:
**PCT/DE97/02379**

(87) Internationale Veröffentlichungsnummer:
**WO 98/18063 (30.04.1998 Gazette 1998/17)**

(54) **VERFAHREN ZUR MODELLIERUNG UND STEUERUNG EINES DYNAMISCHEN SYSTEMS ERSTER ORDNUNG MIT NICHTLINEAREN EIGENSCHAFTEN**

METHOD FOR MODELLING AND CONTROLLING A FIRST ORDER DYNAMIC SYSTEM WITH NON-LINEAR PROPERTIES

PROCEDE POUR LA MODELISATION ET LA COMMANDE D'UN SYSTEME DYNAMIQUE DE PREMIER ORDRE A CARACTERISTIQUES NON LINEAIRES

(84) Benannte Vertragsstaaten:
**DE ES FR GB IT SE**

(30) Priorität: **18.10.1996  DE 19643149**

(43) Veröffentlichungstag der Anmeldung:
**04.08.1999  Patentblatt 1999/31**

(73) Patentinhaber: **SIEMENS AKTIENGESELLSCHAFT
80333 München (DE)**

(72) Erfinder:
• **HOFFMANN, Clemens
D-85579 Neubiberg (DE)**

• **BAMBERGER, Joachim
D-82131 Stockdorf (DE)**

(56) Entgegenhaltungen:
• **J.ANDEL ET AL: "IDENTIFICATION AND PARAMETER ESTIMATION OF REAL SYSTEMS USING ADAPTIVE MODELS" NORTH HOLLAND PUBLISHING COMPANY, 1978, Seiten 1209-1221, XP002054095**
• **D.REDDY ET AL: "AN ADAPTIVE ALGORITHM FOR NONLINEAR SYSTEM IDENTIFICATION" SADHANA, 1991, INDIA, Seiten 263-274, XP002054096**

EP 0 932 857 B1

## Beschreibung

Bei der Erfindung handelt es sich um ein Verfahren zur Nachbildung eines dynamischen Systems erster Ordnung mit nichtlinearen Eigenschaften und dabei insbesondere um ein System zur Regelung des Kraftstoff-Luftverhältnisses $\lambda$ eines Verbrennungsmotors in dynamischen Phasen des Motorbetriebes.

Um bei einem Ottomotor ein bestimmtes Kraftstoff-Luftverhältnis $\lambda$ in dynamischen Phasen des Motorbetriebes einhalten zu können, ist die aktuell in den Zylinder einströmende Luftmasse zu ermitteln, um daraus die beizumessende Kraftstoffeinspritzmenge zu berechnen. Solche dynamischen Betriebsphasen treten z. B. dann auf, wenn sich die Drosselklappenstellung aufgrund der Betätigung durch den Fahrer eines Kraftfahrzeuges abrupt ändert, wie dies z. B. beim unvermittelten Gasgeben oder -wegnehmen des Fahrers der Fall ist. Die in den Zylinder einströmende Luftmasse ist dabei eine Funktion des Luftdruckes im Saugrohr. Bei Ansaugsystemen, die anstelle des Druckes einen Luftmassenstrom messen, muß der Druck zunächst aus der Meßgröße Luftmassenstrom berechnet werden. Dazu sind üblicherweise Näherungslösungen der Strömungsgleichungen zu berechnen. Hierzu werden beispielsweise die bekannten thermodynamischen Grundgleichungen mit der Dichte und der allgemeinen Gaskonstante verwendet. Das vorgeschlagene neue Verfahren zeichnet sich gegenüber dem Stand der Technik dadurch aus, daß es konzeptionell einfacher ist und deshalb zu einem schnelleren Entwurf und zu einer schnelleren Einstellung von Prozeßsteuerungen führt. Weiterhin ist es in seiner Anpassungsfähigkeit wesentlich flexibler und ermöglicht dadurch genauer arbeitende Steuerungen.

Um die bei der herkömmlichen Vorgehensweise für den Prozess aufgestellten Differentialgleichungen auf einem Prozeßrechner, beispielsweise einer Motorsteuerungseinheit auszuwerten, sind die Gleichungen zu diskretisieren. Bei dieser herkömmlichen Vorgehensweise treten jedoch eine Reihe von Problemen auf:

- Bei komplexen Prozessen ist oftmals kein Gleichungsmodell aus ersten Prinzipien formulierbar. Dieses Gleichungsmodell stellt deshalb nur eine Näherung der physikalischen Realität dar. Um das Modell genau an den zu steuernden Prozess anpassen zu können, besitzt es freie Parameter, sowie freie Funktionen (Skalare oder auch ganze Funktionen), welche durch Messungen am Prozess festgelegt werden.
- Bei komplexen Prozessen kann die Benutzung eines physikalisch motivierten Gleichungssystems Artefakte des Prozessverhaltens einführen, welche in der Realität nicht auftreten. Dabei handelt es sich z. B. um Singularitäten im Systemverhalten, bzw. falsches asymptotisches Verhalten.
- Weitere Fehler im Modellverhalten können durch Auswahl des Diskretisierungsverfahrens verursacht werden. Das Diskretisierungsverfahren kann in bestimmten Parameterbereichen instabil sein und beim Modell entweder eine künstliche Schwingneigung hervorrufen oder numerisch explodieren [1].

Aus [3] ist ein Verfahren zur Parameterschätzung bei einer adaptiven Modellbildung zu einer Modellisierung eines realen Systems bekannt. Bei diesem Verfahren basiert die Modellbildung auf einer konventionellen Zustandsbeschreibung eines linearen Systems. Die Parameterschätzung erfolgt durch numerische Bestimmung der Parameter aus einer Ableitung des Zustandsvektors über eine Approximation mittels Lagrange-Polynom.

Aus (4) ist ein Algorithmus zu einer adaptiven Bestimmung eines nichtlinearen Systems bekannt. Bei diesem Algorithmus werden Matrixelemente aus einem ARMAX-Modell unter Verwendung eines erweiterten Pseudo-Linear-Regression-Algorithmus ermittelt.

Die der Erfindung zugrundeliegende Aufgabe besteht also darin, ein verbessertes Verfahren zur Modellierung und Steuerung eines nichtlinearen, dynamischen Systems erster Ordnung abzugeben.

Diese Aufgabe wird gemäß den Merkmalen des Patentanspruches 1 gelöst.

Weiterbildungen der Erfindung ergeben sich aus den abhängigen Ansprüchen.

Die Erfindung besitzt den besonderen Vorteil, daß der Lösungsansatz nicht wie bisher üblich durch den Versuch der Lösung eines Differentialgleichungssystems erfolgt, sondern daß eine algebraische Iterationsvorschrift so vorgegeben wird, daß sie per Definition ein stabiles Verhalten aufweist und daß deren Parameter anhand des dynamischen Systems ermittelt werden.

Ein weiterer Vorteil des erfindungsgemäßen Verfahrens besteht darin, daß das Kriterium für Stabilität der Iteration effizient erfüllt werden kann, indem die Funktion $\varphi$ als Polynom geschrieben wird und somit zu geschlossen angebbaren Nebenbedingungen an die Koeffizienten des Polynoms führt.

Besonders vorteilhaft ist es dabei, daß es das erfindungsgemäße Verfahren erlaubt, verschiedene Optimierungsverfahren durchzuführen. Dabei können einzelne zu bestimmende Parameter des Systems sowohl anhand statischer Messungen am dynamischen System bei konstanten Eingangsgrößen vorgenommen werden und in Form von Kennlinienfeldern in einem Speicher abgelegt werden, oder dieses Parameterverhalten kann einem neuronalen Netz antrainiert werden, um in Realzeit entsprechende Ausgangsgrößen zu liefern. Weiterhin gestattet es das erfindungsgemäße Verfahren vorteilhafterweise aber auch eine globale Optimierung durchzuführen, bei welcher alle Variationen der Einflußgröße gelichzeitig bei der Optimierung berücksichtigt werden. Für diese unterschiedlichen Ansätze sieht es das erfindungsgemäße Verfahren vorteilhafterweise vor, daß verschiedene Lösungsstrategien bei der Lösung der unterschiedlichen Regressionsprobleme verwendet werden.

Besonders vorteilhaft kann das erfindungsgemäße Verfahren bei der Einstellung eines konstanten Kraft-Luftstoff-Gemisches λ von Otto-Motoren verwendet werden, da hier gilt, daß die Ausgangsgröße y gleich der Zustandsgröße x ist, weil der Umgebungsdruck dem Luftdruck innerhalb des Saugrohres entspricht. Damit wird die Lösung des Iterationsproblems wesentlich vereinfacht.

Besonders vorteilhaft werden durch Versuche ermittelte Approximationsparameter und die zugehörigen Einflußgrößen in Kennfeldern abgelegt, damit diese beim Betrieb des dynamischen Systems schnell verfügbar sind und einem Steuerrechner zugeführt werden können.

Besonders vorteilhaft werden bei der Anwendung des erfindungsgemäßen Verfahrens die zu diskreten Eingangsgrößen ermittelten Approximationsparameter einem neuronalen Netz antrainiert, damit die Parameter für einen Betrieb des dynamischen Systems auch in Zwischenbereichen, in welchen nicht gemessen wurde, bestimmt werden können.

Besonders vorteilhaft werden die nach dem erfindungsgemäßen Iterationsverfahren mit anschließender Parameterbestimmung ermittelten Modelle dazu benutzt, um das dynamische System, welches sie modellieren in Echtzeit zu steuern. Hierzu werden die Einflußgrößen des dynamischen Systems dem Modell zugeführt, worauf es seine Ausgangsgröße an das dynamische System direkt, bzw. an an entsprechende Steuereinrichtungen des dynamischen Systems abgeben kann.

Im folgenden wird die Erfindung anhand von Figuren weiter erläutert.

Fig. 1    zeigt die erfindungsgemäße Iterationsvorschrift für den Saugrohrdruck bei einem Otto-Motor.

Fig. 2    zeigt einen Zeitverlauf eines Saugrohrdruckes, welcher sich anhand der erfindungsgemäßen Iterationsvorschrift von unterschiedlichen Druckniveaus aus ergibt.

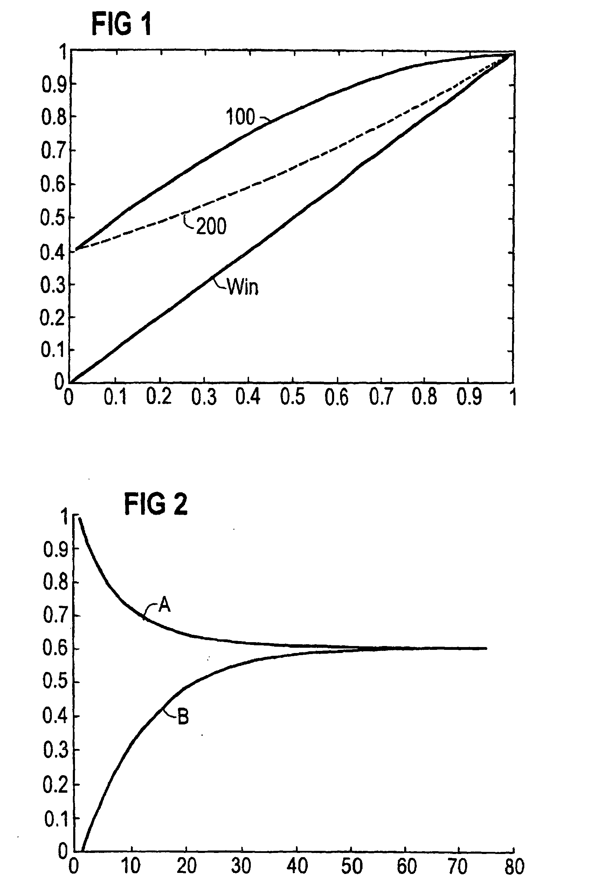

Fig. 1. zeigt verschiedene Abhängigkeiten des erfindungsgemäßen Verfahrens bei Anwendung auf das Kraftstoff-Luft-Mischungsverhältnis λ eines Otto-Motors. Nach rechts ist der Saugrohrdruck zur Zeit k aufgetragen und nach oben der Saugrohrdruck zur Zeit k+1. Diese Kurven wurden beispielsweise bei einer konstanten Drehzahl eines Otto-Motors von 2016 Touren pro Minute ermittelt. Der Saugrohrdruckverlauf ist hier mit 100 bezeichnet, während der Parameterverlauf der Parameterder Iterationsvorschrift $\varphi(x, k, \mathbf{u})$ mit 200 bezeichnet ist. Zum Vergleich der beiden Kurven ist die Winkelhalbierende Win angegeben, bei der keine zeitabhängige Druckänderung stattfindet.

Gemäß dem erfindungsgemäßen Verfahren soll ein dynamisches System erster Ordnung identifiziert und modelliert werden, damit ein dynamisches System, welches durch dieses Modell beschrieben wird, in Echtzeit besser gesteuert werden kann. Hierzu sind die dynamischen Grundgleichungen des Systems, mit

$$\dot{x} = \hat{f}(x,u) \tag{1}$$

$$y = \hat{g}(x,u) \tag{2}$$

angegeben. Dabei wird das dynamische System, welches beispielsweise die Regelung des Kraftstoff-Luft-Verhältnisses λ eines Verbrennungsmotors darstellen kann, mit Hilfe von Eingangs- und Ausgangsgrößen, sowie einer Zustandsgröße x beschrieben. Im vorliegenden Fall besitzt dieses System beispielweise m Eingänge, welche in einem m-komponentigen Vektor $\mathbf{u}$ zusammengefaßt werden. Weiterhin weist dieses System beispielsweise 1 Ausgänge auf, welche als 1-komponentige Ausgangsvektoren y zusammengefaßt werden. Bei der Anwendung dieser Gleichungen auf die Bestimmung der in einem Zylinder eines Otto-Motors einströmenden Luftmasse steht die Zustandsgröße x beispielsweise für den Luftdruck. Mit $\mathbf{u}$ sind die wesentlichen Eingangsgrößen, wie der Drosselklappenwinkel und die Motordrehzahl erfaßt. Fallweise können für eine genauere Beschreibung des Systemverhaltens noch Einflußgrößen wie der Umgebungsluftdruck und verschiedene Motortemperaturen hinzukommen. Bei diesem dynamischen System ist der Saugrohrdruck identisch mit der Ausgangsgröße. Damit läßt sich Gleichung (2) wie folgt darstellen

$$y = x$$

Zur Modellierung dieses dynamischen Systems geht das erfindungsgemäße Verfahren von dem Ansatz aus, herkömmliche Verfahren von ihrem Ergebnis her zu betrachten. Herkömmliche Verfahren, welche auf der Lösung von Differentialgleichungen basieren, liefern beispielsweise als Ergebnis eine algebraische Iterationsvorschrift, welche auf einem Computer berechenbar ist. Bei der erfindungsgemäßen Vorgehensweise wird eine spezielle algebraische Iterationsvorschrift zum Ausgangspunkt des erfindungsgemäßen Verfahrens gemacht. Diese Iterationsvorschrift weist jedoch, und darin sind wesentliche Vorteile des erfindungsgemäßen Verfahrens begründet, bestimmte Vorteile und Eigenschaften gegenüber herkömmlich definierten Iterationsvorschriften auf. Diese Iterationsvorschrift ist so konstruiert, daß sie per Definition asymptotisch stabil ist. Weiterhin besitzt sie als freie Parameter in Form von Skalaren oder Funktionen, welche durch statistische Verfahren an Messungen des dynamischen Systems angepaßt werden können. Diese Iterationsvorschrift lautet vorzugsweise:

$$x_{k+1} = f(x_k) = x_k + (x_\infty(u) - x_k) \cdot \varphi(x_k, u, k) \quad 0 < \varphi(x) < 1 \quad \forall x \in S \quad (4)$$

Dabei ist $x_k$ vorzugsweise die Zustandsgröße Saugrohrdruck zum Zeitpunkt k. Alle Werte, welche x annehmen kann, bilden den Zustandsraum S. Der einzige Fixpunkt in dieser Iterationsvorschrift ist $X_\infty(u)$ Dieser Fixpunkt hängt lediglich von den Einflußgrößen $u$ ab. Anschaulich ergibt sich dieser Fixpunkt daraus, wenn in Gleichung 4 die linke Seite gleich $x_k$ angesetzt wird. Daraus ergibt sich die Forderung

$$(x_\infty (u)-x_k) * \varphi (x_k, u, k)=0.$$

Da die Parameter $\varphi \neq 0$ sein sollen folgt daraus, daß $x_k=x_\infty$ sein muß. Daraus folgt, daß es lediglich diesen einen Fixpunkt gibt. Die Möglichkeit eines Grenzzyklus ist für die spezielle Wahl der Iterationsvorschrift nach Gleichung (4) ausgeschlossen, denn diese Iteration stellt eine globale Kontraktion dar. Für eine solche Kontraktion gilt:

$$\|f(x_k)\| < \|x_k\|$$

Nach dem Kontraktionssatz von Kalman und Bertram [2], ist eine globale Kontraktion global asymptotisch stabil. Aus diesem Satz ergibt sich für $\varphi$, daß es zwischen 0 und 2 liegen muß. Durch eine weitere Einschränkung der Werte von $\varphi$ auf den Bereich $0 < \varphi \leq 1$ wird ein aperiodisches und nicht oszillierendes Einschwingen erzwungen.
In Fig. 2 ist der Zeitverlauf des Saugrohrdruckes dargestellt, welcher sich aufgrund der erfindungsgemäßen Iterationsvorschrift ergibt. Dargestellt sind zwei Einschwingvorgänge, mit jeweils hohem Druck von 1 Bar, welcher als A bezeichnet ist und niedrigem Druck von 0 Bar, welcher als B bezeichnet ist als Druckanfangszustand und gleichem Druckendzustand von hier 0,6 Bar. Nach oben ist der Saugrohrdruck normiert auf den Umgebungsdruck aufgetragen, während nach rechts der Iterationsindex aufgetragen ist. Dieser Saugrohrdruckverlauf wurde bei einer konstanten Drehzahl von 2016 Touren/min. ermittelt, wobei das dynamische System durch Drosselklappensprünge angeregt wurde. Für den Fall daß die Meßgröße nicht gleich, der Zustandsgröße ist, d. h. nicht Gleichung (3) gilt, sollte bevorzugt die Zustandgröße durch Inversion von Gleichung (2) ermittelt werden:

$$x = \hat{g}^{-1}(y,u)$$

Bei der Modellierung des Saugrohrdruckes nach dem erfindungsgemäßen Verfahren wurde für $\varphi$ die spezielle Form

$$\varphi(x_k,u) = \left(\eta_1(u) + \eta_2(u)x_k + \eta_3(u)x_k^2\right) \qquad (6)$$

gewählt.
Die konkrete Iterationsvorschrift lautet für diesen Fall

$$x_{k+1} = x_k + (x_\infty(u) - x_k) \cdot \left(\eta_1(u) + \eta_2(u)x_k + \eta_3(u)x_k^2\right) \qquad (7)$$

Gemäß der Erfindung bilden die Gleichungen (4) bis (7) die Grundlage für die erfindungsgemäßen Modellierungsverfahren.

Dabei lassen sich im wesentliche zwei Verfahren, die Einzelpunktoptimierung und die globale Optimierung beschreiben.

Bei der Durchführung einer Einzelpunktoptimierung nach dem erfindungsgemäßen Verfahren wird bevorzugt der Wert von $x_\infty$ durch statische Messungen am dynamischen System bestimmt. Bei dem gewählten Anwendungsbeispiel sind die Bedingungen für einen statischen Betrieb beispielsweise eine feste Drosselklappenstellung und eine feste Motordrehzahl. In einem weiteren Schritt wird zur Festlegung der Parameter $\eta_{1\text{-}3}$ das physikalische dynamische System an verschiedenen Arbeitspunkten auf geeignete Weise angeregt. Bei dem gewählten Anwendungsbeispiel wird z. B. eine Sprungfunktion des Drosselklappenwinkels auferlegt und die Systemantwort in Form eines Zeitverhaltens des Saugrohrdruckes gemessen. In einem weiteren Schritt wird im Anschluß nach vorliegenden Messungen das Regressionsproblem

$$\min \sum_{j=1}^{N(u)-1} \left( \hat{x}_{j,u} - x_{j,u} \right)^2 \qquad (8)$$

gelöst. Dabei markiert j jeden der N-1 Zeitpunkte und $\hat{x}_{j,u}$ stellt den j-ten Meßwert der Zustandsgröße x für einen bestimmten Wert u der Einflußgröße dar. Dabei wird je nach Wahl der Funktion $\varphi(x_k,\mathbf{u})$ und seiner Abhängigkeit von irgendwelchen Parametern $\eta_i$ das Regressionsproblem nichtlinear oder linear. Um die Beschränktheit von $\varphi(x_k,\mathbf{u})$ zu erzwingen, ist deshalb im allgemeinen eine nichtlineare Nebenbedingung zwischen den Paramtern $\eta_i$ zu erfüllen. Für eine schnelle Verfügbarkeit zum Einsatz des Modells in einem Regelungsprozeß für eine Motorsteuerung können beispielsweise die Parameterfelder $\eta_i$ in Form von Kennfeldern abgelegt werden. Insbesondere kann damit das erfindungsgemäße Verfahren in Verbindung mit gegenwärtigen Motorsteuerungseinheiten auf Basis von Kennfeldern eingesetzt werden. Bevorzugt lassen sich diese Parameterfelder $\eta_i$ aber auch als neuronale Netze darstellen, welche die Einflußgrößen $\mathbf{u}$ als Eingangsgrößen und die Werte $\eta_i$ als Ausgangsgrößen aufweisen. Die Iterationsvorschrift nach Gleichung (4) stellt dann ein neuronales Netz mit einer sog. Mixture of Experts Struktur dar.

Beim Verfahren der globalen Optimierung werden zunächst die Messungen in gleicher Weise wie bei der Einzelpunktoptimierung durchgeführt. In einem weiteren Schritt werden jedoch für die Parameter $\eta_i$ geeignete allgemeine Funktionen $\eta_i(\mathbf{u},\mathbf{w})$, wie z. B. in Form von neuronalen Netzen oder radialen Basisfunktionen angesetzt, welche von Funktionsparametern $\mathbf{w}$ abhängen. Im Anschluß ist dann das Regressionsproblem

$$\min \sum_{j=1}^{N(u)} \left( \hat{x}_j - x_{j,w} \right)^2 \qquad (9)$$

zu lösen.

Dieses Regressionsproblem ist im allgemeinen nichtlinear in den Parametern $\mathbf{w}$. Bei der globalen Optimierung ist zur Einhaltung der Beschränktheit von f eine nichtlineare Nebenbedingung zwischen den Parametern $\mathbf{w}$ zu erfüllen.

Der Unterschied zwischen dem Verfahren der Einzelpunktoptimierung und dem Verfahren der globalen Optimierung besteht vor allen Dingen darin, daß die zu minimierende Summe auch über alle Variationen der Eingangsgröße zu führen ist. Die freien Parameter dieses Regressionsproblems sind nicht die Skalare $\eta_i$, sondern die Parameter $\mathbf{w}$ der speziellen Funktionenwahl für $\eta_i(\mathbf{u},\mathbf{w})$. Das Verfahren der globalen Optimierung kann in bestimmten Fällen obwohl es aufwendiger ist vorteilhaft sein, da es glattere Parameterfunktionen $\eta_i(\mathbf{u},\mathbf{w})$ zur Folge hat.

Zusammenfassend läßt sich die erfindungsgemäße Vorgehensweise wie folgt beschrieben. Zunächst wird eine Iterationsvorschrift gemäß Gleichung (4) aufgestellt, welche die Eigenschaft besitzt, daß sie genau einen stabilen Fixpunkt $x_\infty$ aufweist, wobei dieser Fixpunkt $x_\infty$ ohne Überschwingen erreicht werden soll. In einem weiteren Schritt wird das dynamische System zur präzisen Bestimmung des Fixpunktes $x_\infty$ statisch vermessen. Im Anschluß daran wird bevorzugt das System dynamisch an verschiedenen Arbeitspunkten vermessen, wobei die Zustandsgröße entweder meßbar oder berechenbar sein muß. Die Parameterder Iterationsvorschrift $\eta_i$ werden im Anschluß durch Einzelpunkt- oder globale Optimierung ermittelt. In einem weiteren Schritt wird das dynamische Modell eingesetzt, indem die Iterationsvorschrift auf einem Prozeßrechner, wie beispielsweise einer Motorsteuerungseinheit implementiert wird. Damit stehen in Echtzeit berechnete Werte des Saugrohrdrucks zur Verfügung, welche in der Steuerung weiterverarbeitet werden können.

Literatur:

[1] S.N. Rasband, Chaotic Dynamics of Nonlinear Systems, John Wiley, N.Y., 1990;

[2] R.E. Kalman und J.E. Bertram, Control System Analysis and Design via the second Method of Liapunov, Part II, Discrete Systems ASME J. Basic Engng, **82**, S. 394-400, 1960;

[3] J. Andel et al., Identification And Parameter Estimation Of Real Systems Using Adaptive Models, North Holland Publishing, 1978, Seite 1209-1221, XP002054095;

[4] D. Reeedy et al., An Adaptive Algorithm For Nonlinear System Identification, Sadhana, 1991, India, Seite 263-274, XP002054096.

**Patentansprüche**

1. Verfahren zur Modellierung eines technischen Systems erster Ordnung mit nichtlinearen Eigenschaften,

   a) bei dem folgende Systembeschreibungsgleichungen für das technische System gelten:

$$\dot{x} = \hat{f}(x,u) \tag{1}$$

$$y = \hat{g}(x,u) \tag{2}$$

   mit

   x: skalare Zustandsgröße
   u: m-komponentiger Eingangsvektor
   y: l-komponentiger Ausgangsvektor

   b) bei dem x nach folgender Rekursionsformel bestimmt wird:

$$x_{k+1} = f(x_k) = x_k + (x_\infty(u) - x_k) \cdot \varphi(x_k, u, k) \tag{4}$$

   mit

   $\varphi$: $0 < \varphi(x) < 1 \; \forall x \in S$
   S: Zustandsraum
   $x_k$: x zum Zeitpunkt k
   $x_\infty$: Fixpunkt

   c) bei dem $x_\infty$ durch statische Messung am System bei feststehendem **u** ermittelt wird,
   d) und bei dem $\varphi$ durch Anregung des Systems, Messung der Systemantwort und anschließender Lösung des Regressionsproblems

$$\min \sum_{j=1}^{N(u)-1} \left( \hat{x}_{j,u} - x_{j,u} \right)^2 \tag{8}$$

   mit

j:      Laufgröße der Messzeitpunkte

N:     vorgegebene maximale Anzahl von Summanden

$x_{j,u}$:    j-ter Messwert der Zustandsgröße x für einen bestimmten Wert von **u**

bestimmt wird.

2.   Verfahren nach Anspruch 1,
bei dem als Systembeschreibungsgleichungen für das technische System folgende diskrete Versionen der Gleichungen (1) und (2)verwendet werden:

$$X_{k+1} = f(x_k, u) \tag{1}$$

$$y_k = g(x_k, u) \tag{2}$$

3.   Verfahren nach Anspruch 1 oder 2,

a) bei dem x nach folgender Rekursionsformel bestimmt wird:

$$x_{k+1} = x_k + \left(x_\infty(u) - x_k\right) \cdot \left(\eta_1(u) + \eta_2(u)x_k + \eta_3(u)x_k^2\right) \tag{7}$$

mit

$$\varphi(x_k, u) = \left(\eta_1(u) + \eta_2(u)x_k + \eta_3(u)x_k^2\right) \tag{6}$$

b) und bei dem die Parameter $\eta_1$, $\eta_2$, $\eta_3$ durch Anregung des Systems an verschiedenen Arbeitspunkten, Messung der Systemantwort und anschließender Lösung des Regressionsproblems

$$\min \sum_{j=1}^{N(u)-1} \left(\hat{x}_{j,u} - x_{j,u}\right)^2 \tag{8}$$

mit

j:      Laufgröße der Messzeitpunkte

N:     vorgegebene maximale Anzahl von Summanden

$x_{j,u}$:    j-ter Messwert der Zustandsgröße x für einen bestimmten Wert von **u**

bestimmt werden.

4.   Verfahren nach Anspruch 1

-   bei dem φ durch eine allgemeine trainierte Funktion oder eines neuronalen Netzes als φ(**u,w**) in Abhängigkeit von Funktionsparametern **w** und anschließender Lösung des Regressionsproblems

$$\min \sum_{j=1}^{N(u)} \left(\hat{x}_j - x_{j,w}\right)^2 \tag{9}$$

mit

j:        Laufgröße
N:       vorgegebene maximale Anzahl von Summanden
$x_{j,w}$:    j-ter Wert der Zustandsgröße x für einen bestimmten Wert von **w**

bestimmt wird.

5. Verfahren nach Anspruch 4,

   a) bei dem x nach folgender Rekursionsformel bestimmt wird:

$$x_{k+1} = x_k + \left(x_\infty(u) - x_k\right) \cdot \left(\eta_1(u) + \eta_2(u)x_k + \eta_3(u)x_k^2\right) \quad (5)$$

   mit

$$\varphi(x_k, u) = \left(\eta_1(u) + \eta_2(u)x_k + \eta_3(u)x_k^2\right) \quad (6)$$

   b) und bei dem die Parameter $\eta_1$, $\eta_2$, $\eta_3$ durch eine allgemeine trainierte Funktion oder eines neuronalen Netzes als $\eta_i$ (**u,w**) in Abhängigkeit von Funktionsparametern **w** und anschließender Lösung des Regressionsproblems

$$\min \sum_{j=1}^{N(u)} \left(\hat{x}_j - x_{j,w}\right)^2 \quad (9)$$

   mit

j:        Laufgröße
N:       vorgegebene maximale Anzahl von Summanden
$x_{j,w}$:    j-ter Wert der Zustandsgröße **x** für einen bestimmten Wert von **w**

bestimmt werden.

6. Verfahren nach einem der vorangehenden Ansprüche, bei dem als Zustandsgröße x mindestens der Saugrohrdruck im Ansaugtrakt eines Verbrennungsmotors bestimmt wird, wobei y = x gilt und als Eingangsgrößen mindestens eine oder mehrere der folgenden Parameter Verwendung finden: Drosselklappenwinkel, Motordrehzahl, Umgebungsluftdruck, Motortemperatur.

7. Verfahren nach Anspruch 6, bei dem die gemessenen Parameter in Form von Parameterfeldern gespeichert werden, um beim Betrieb des Motors schnell abrufbar zu sein.

8. Verfahren nach Anspruch 6, bei dem die gemessenen Parameterabhängigkeiten einem neuronalen Netz trainiert werden, um beim Betrieb des Motors schnell verfügbar zu sein.

9. Verfahren nach einem der vorangehenden Ansprüche, eingesetzt zur Steuerung eines technischen Systems erster Ordnung mit nichtlinearen Eigenschaften, bei dem zur Steuerung des technischen Systems die von dem modellierten technischen System bestimmte Zustandsgröße derart verwendet wird, dass sie einer Steuereinrichtung des technischen Systems zugeführt wird.

**Claims**

1. Method for modelling a first-order technical system with non-linear properties,

   a) in which the following system-describing equations hold for the technical system:

$$\dot{x} = \overset{\wedge}{f}(x, u) \tag{1}$$

$$y = \overset{\wedge}{g}(x, u) \tag{2}$$

   with

   x:    Scalar state variable
   u:    m-component input vector
   y:    1-component output vector

   b) in which x is determined using the following recursion formula:

$$x_{k+1} = f(x_k) = x_k + (x_\infty(u) - x_k) \cdot \varphi(x_k, u, k) \tag{4}$$

   with

   $\varphi$:    $0 < \varphi(x) < 1 \ \forall x \in S$
   S:    state space
   $x_k$:    x at instant k
   $x_\infty$:    fixed point

   c) in which $x_\infty$ is determined by static measurement on the system for fixed **u**,
   d) and in which $\varphi$ is determined by excitation of the system, measurement of the system response and subsequent solution of the regression problem

$$\min \ \sum_{j=1}^{N(u)-1} \left( \hat{x}_{j,u} - x_{j,u} \right)^2 \tag{8}$$

   where

   j:    running variable of the measuring instants
   N:    prescribed maximum number of summands
   $\hat{x}_{j,u}$:    jth measured value of the state variable x for a specific value of **u**.

2. Method according to Claim 1, in which the following discrete versions of equations (1) and (2) are used as system-describing equations for the technical system:

$$x_{k+1} = f(x_k, u) \tag{1}$$

$$y_k = g(x_k, u) \tag{2}$$

3. Method according to Claim 1 or 2,

a) in which x is determined according to the following recursion formula:

$$x_{k+1} = x_k + (x_\infty(u) - x_k) \cdot \left(\eta_1(u) + \eta_2(u)x_k + \eta_3(u)x_k^2\right) \qquad (7)$$

with

$$\varphi(x_k, u) = \left(\eta_1(u) + \eta_2(u)x_k + \eta_3(u)x_k^2\right) \qquad (6)$$

b) and in which the parameters $\eta_1$, $\eta_2$, $\eta_3$ are determined by excitation of the system at various operating points, measurement of the system response and subsequent solution of the regression problem

$$\min \sum_{j=1}^{N(u)-1} \left(\hat{x}_{j,u} - x_{j,u}\right)^2 \qquad (8)$$

with

j:  running variable of the measuring instants
$\hat{N}$:  prescribed maximum number of summands
$x_{j,u}$:  jth measured value of the state variable **x** for a specific value **u**.

4. Method according to Claim 1,

- in which $\varphi$ is determined by a general trained function or a neural network as $\varphi(u,w)$ as a function of function parameters **w** and subsequent solution of the regression problem

$$\min \sum_{j=1}^{N(u)} \left(\hat{x}_j - x_{j,w}\right)^2 \qquad (9)$$

with

j:  running variable
N:  prescribed maximum number of summands
$x_{j,w}$:  jth value of the state variable **x** for a specific value of **w**.

5. Method according to Claim 4,

a) in which **x** is determined according to the following recursion formula:

$$x_{k+1} = x_k + (x_\infty(u) - x_k) \cdot \left(\eta_1(u) + \eta_2(u)x_k + \eta_3(u)x_k^2\right) \qquad (5)$$

with

$$\varphi(x_k, u) = \left(\eta_1(u) + \eta_2(u)x_k + \eta_3(u)x_k^2\right) \qquad (6)$$

b) and in which the parameters $\eta_1$, $\eta_2$, $\eta_3$ are determined by a general trained function of a neural network as

$\eta_i(u,w)$ as a function of function parameters **w** and subsequent solution of the regression problem

$$\min \sum_{j=1}^{N(u)} \left( \hat{x}_j - x_{j,w} \right)^2 \qquad (9)$$

with

j: running variable
N: prescribed maximum number of summands
$x_{j,w}$: jth value of the state variable **x** for a specific value of **w**.

**6.** Method according to one of the preceding claims, in which at least the induction-pipe pressure in the induction tract of an internal combustion engine is determined as state variable **x**, in which case y = x holds, and at least one or more of the following parameters are used as input variables: throttle angle, engine speed, ambient-air pressure, engine temperature.

**7.** Method according to Claim 6, in which the measured parameters are stored in the form of parameter fields in order that they can be called up quickly during operation of the engine.

**8.** Method according to Claim 6, in which the measured parameter dependencies are trained to a neural network in order to be quickly available during operation of the engine.

**9.** Method according to one of the preceding claims, used for controlling a first-order technical system with non-linear properties, in the case of which in order to control the technical system the state variable determined by the modelled technical system is used in such a way that it is fed to a control device of the technical system.

**Revendications**

**1.** Procédé de modélisation d'un système technique de premier ordre, possédant des caractéristiques non linéaires

a) dans lequel les équations suivantes sont applicables pour la description du système technique :

$$\dot{x} = \hat{f}(x, u) \qquad (1)$$

$$y = \hat{g}(x, u) \qquad (2)$$

avec

x : grandeur d'état scalaire
u : vecteur d'entrée à m-composantes
y : vecteur de sortie à l-composantes

b) dans lequel x est défini selon la formule de récurrence suivante :

$$x_{k+1} = f(x_k) = x_k + \left( x_\infty(u) - x_k \right) \cdot \varphi(x_k, u, k) \qquad (4)$$

avec

$\varphi$ : (formule)
S : espace d'état

$X_k$:X au temps k
x∞ : point fixe

c) dans lequel x∞ est défini par une mesure statique sur le système lorsque u est fixe,
d) et dans lequel $\varphi$ est défini par excitation du système, mesure de la réponse du système, puis résolution du problème de régression

$$\min \sum_{j=1}^{N(u)-1} \left(\hat{x}_{j,u} - x_{j,u}\right)^2 \tag{8}$$

avec

j : valeur de propagation des moments de mesure
N : valeur maximale prescrite des opérandes
$X_{j,u}$ : $j^{\text{ème}}$ valeur mesurée de la grandeur d'état x pour une valeur définie de u.

**2.** Procédé selon la revendication 1, dans lequel les versions discrètes suivantes des équations (1) et (2) :

$$X_{k+1} = f(X_k, u) \tag{1}$$

$$y_k = g(x_k, u) \tag{2}$$

sont utilisées en tant qu'équations pour la description du système technique.

**3.** Procédé selon l'une quelconque des revendications 1 ou 2,

a) dans lequel x est défini selon la formule de récurrence suivante :

$$x_{k+1} = x_k + \left(x_\infty(u) - x_k\right) \cdot \left(\eta_1(u) + \eta_2(u)x_k + \eta_3(u)x_k^2\right) \tag{7}$$

avec

$$\varphi(x_k, u) = \left(\eta_1(u) + \eta_2(u)x_k + \eta_3(u)x_k^2\right) \tag{6}$$

b) et dans lequel les paramètres $\eta_1\eta_2\eta_3$ sont définis par excitation du système à différents points de fonctionnement, mesure de la réponse du système et résolution du problème de régression

$$\min \sum_{j=1}^{N(u)-1} \left(\hat{x}_{j,u} - x_{j,u}\right)^2 \tag{8}$$

avec

j : valeur de propagation des moments de mesure
N : valeur maximale prescrite des opérandes

$X_{j,u}$ : $j^{ème}$ valeur mesurée de la grandeur d'état x pour une valeur définie de u.

4. Procédé selon la revendication 1

- dans lequel $\varphi$ est défini par une fonction entraînée générale ou par un réseau neuronal en tant que $\varphi$ (u, w), en dépendance des paramètres fonctionnels w et par résolution du problème de régression

$$\min \sum_{j=1}^{N(u)} \left( \hat{x}_j - x_{j,w} \right)^2 \qquad (9)$$

avec

j : valeur de propagation
N : valeur maximale prescrite des opérandes
$X_{j,w}$ : $j^{ème}$ valeur mesurée de la grandeur d'état x pour une valeur définie de w.

5. Procédé selon la revendication 4

a) dans lequel x est défini selon la formula de récurrence suivante :

$$x_{k+1} = x_k + \left( x_\infty(u) - x_k \right) \cdot \left( \eta_1(u) + \eta_2(u)x_k + \eta_3(u)x_k^2 \right) \qquad (5)$$

avec

$$\varphi(x_k, u) = \left( \eta_1(u) + \eta_2(u)x_k + \eta_3(u)x_k^2 \right) \qquad (6)$$

b) et dans lequel les paramètres $\eta_1\eta_2\eta_3$ sont définis par une fonction entraînée générale ou par un réseau neuronal, en tant que $\eta_i$ (u, w), en dépendance des paramètres fonctionnels w et par résolution du problème de régression

$$\min \sum_{j=1}^{N(u)} \left( \hat{x}_j - x_{j,w} \right)^2 \qquad (9)$$

avec

j : valeur de propagation
N : valeur maximale prescrite des opérandes
$X_{j,w}$ : $j^{ème}$ valeur mesurée de la grandeur d'état x, pour une valeur définie de w.

6. Procédé selon l'une quelconque des revendications précédentes, dans lequel la pression au tuyau d'aspiration dans le tronçon d'aspiration d'un moteur à combustion interne est au moins définie en tant que grandeur d'état x, dans lequel cas y = x et au moins un ou plusieurs des paramètres suivants sont appliqués en tant que grandeurs d'entrée : angle de la soupape d'étranglement, vitesse de rotation du moteur, pression de l'air environnant, température du moteur.

**7.** Procédé selon la revendication 6, dans lequel les paramètres mesurés sont mémorisés sous forme de champs de paramètres et peuvent être rapidement interrogés lorsque le moteur fonctionne.

**8.** Procédé selon la revendication 6, dans lequel les dépendances entre les paramètres mesurés sont entraînées dans un réseau neuronal, pour être rapidement disponibles lorsque le moteur fonctionne.

**9.** Procédé selon l'une quelconque des revendications précédentes, utilisé pour commander un système technique de premier ordre, présentant des caractéristiques non linéaires, dans lequel la grandeur d'état définie par le système technique modélisé est utilisée pour commander le système technique, en étant chargée dans un système de commande du système technique.

FIG 1

FIG 2